# EUROPEAN PATENT SPECIFICATION

(11) **EP 4 173 919 B1**
(45) Date of publication and mention of the grant of the patent: **26.06.2024**
(21) Application number: 21206093.3
(22) Date of filing: 02.11.2021
(51) Int. Cl.: B60W 50/14, B60W 30/095, B60W 30/18

(54) **A DRIVER ASSISTANCE SYSTEM FOR HEAVY-DUTY VEHICLES WITH OVERHANG**
FAHRERASSISTENZSYSTEM FÜR SCHWERLASTFAHRZEUGE MIT ÜBERHANG
SYSTÈME D'ASSISTANCE AU CONDUCTEUR POUR VÉHICULES LOURDS AVEC SURPLOMB

(43) Date of publication of application: 03.05.2023
(73) Proprietor: VOLVO TRUCK CORPORATION, 405 08 Göteborg (SE)
(72) Inventor: LARSSON, Lena, 426 74 Västra Frölunda (SE); PETTERSSON, Emil, Göteborg 414 57 (SE)
(74) Representative: Ström & Gulliksson AB

(56) References cited:
- DE-A1-102016 221 106
- FR-A1- 3 103 306
- SE-A1- 1 950 030
- US-A1- 2016 297 430
- US-A1- 2018 158 337
- US-A1- 2020 156 630

## Description

### TECHNICAL FIELD

The present invention relates to heavy duty vehicles, and in particular to heavy-duty vehicles with significant overhang. Although the invention will be described mainly with respect to semi-trailer vehicles and trucks, the invention is not restricted to this particular type of vehicle but may also be used in other types of vehicles, such as busses and construction equipment vehicles.

### BACKGROUND

Heavy-duty vehicles such as semi-trailer vehicles, trucks, and busses are sometimes difficult to manoeuvre since the different vehicle parts do not always follow the same path. For instance, an articulated vehicle may sweep over an area of considerable size during a reversal manoeuvre, as discussed in WO 2014185828 A1. Generally, the longer the effective wheelbase of the vehicle, the larger the swept area.

Many different types of advanced driver assistance systems (ADAS) have been proposed in order to simplify the operation of heavy-duty vehicles.

For instance, US 20170272664 A1 describes a visual system which presents a predicted trajectory during reversal of a vehicle to a driver of the vehicle. The predicted trajectory is determined based on a state of the vehicle and may be configured to show not only the path of the wheels, but also the predicted trajectory of a trailer body.

US 2017349213 A1 discloses a guidance system for assisting a driver during cornering with a vehicle comprising a trailer unit. This ADAS system also provides some rudimentary guidance for a driver when driving in a forward direction, i.e., not only during vehicle reversal.

DE 102016221106 A discloses a system arranged to provide guidance when selecting a vehicle path.

However, despite the work done to-date, there is a need for further improvements in ADAS for operating heavy-duty vehicles.

### SUMMARY

It is an object of the present invention to provide systems, methods and vehicles which alleviate at least some of the above-mentioned issues.

This object is at least in part achieved by an advanced driver assistance system (ADAS) for a heavy-duty vehicle. The ADAS comprises a road geometry determining device arranged to determine a geometry of a road section in a forward direction ahead of the vehicle, and a vehicle motion management (VMM) module configured to predict a swept area by the vehicle when driving in the forward direction, based on a geometric model of the vehicle and on a current vehicle control command, wherein the swept area by the vehicle comprises an area traversed by an overhang of the vehicle. The ADAS further comprises a display device configured to illustrate the geometry of the road section and the predicted swept area by the vehicle in dependence of the current vehicle control command. Thus, a driver support system is provided which lets the driver know what the swept area will be like if there is no change in, e.g., steering, allowing the driver to compare the predicted swept area and the geometry of the road section ahead of the vehicle. The system advantageously displays the swept area due to wheelbase (as discussed in, e.g., WO 2014185828 A1) and also the increase in swept area due to overhangs of the vehicle, i.e., front and/or rear overhangs, which could add considerably to the overall swept area of the vehicle. This way the driver can avoid maneuvers which otherwise lead to problems such as collisions with objects in the environments.

According to aspects, the road geometry comprises left and right road borders delimiting a drivable area of the road geometry. The ADAS is configured to illustrate the part of the environment in front of the vehicle, which is drivable, and also the predicted swept area. This way the driver can easily see if the swept area is enclosed by the drivable area by comparing the two, or if some part of the swept area breaches the drivable area. The display may, e.g., be configured to show a camera feed of the road geometry in front of the vehicle (which of course is an accurate illustration of the road geometry in front of the vehicle), with a graphical overlay determined by the VMM module which illustrates the predicted swept area in relation to the camera feed.

According to aspects, the road geometry also comprises obstacles in the forward direction ahead of the vehicle. An obstacle may or may not represent a potential problem. The display device may be configured to highlight detected obstacles, e.g., by graphical emphasis such as a red square indicating the extent of the obstacle. Also, a section of curb may be possible to traverse while a large stone or side fence may not be possible to traverse. Thus, the obstacles of the road geometry can optionally be classified into two or more severity levels indicative of a consequence of a particular vehicle driving over the obstacle. By illustrating a road geometry which comprises obstacles, the driver can determine if the current maneuver is acceptable or not in a convenient manner. Some vehicles may be able to traverse more severe obstacles than other vehicles. Thus, the severity level can be determined relative to the ground clearance capability and/or terrain maneuverability of the vehicle.

According to aspects, the obstacles of the road geometry are associated with respective obstacle heights, wherein each point in the swept area is associated with a predicted smallest height of the vehicle part traversing the point. It is appreciated that some parts of the vehicle may be able to traverse relatively high obstacles. For instance, the ground clearance of an overhang may be on the order of decimeters or more. By displaying obstacle heights and smallest height of the vehicle, the system conveniently informs the driver about a potential collision with an object. The road geometry may also comprise a slope. In this case the system can also warn the driver if the slope of the surface in front of the vehicle limits the drivable area, due to that some part of the vehicle is predicted to come in contact with the ground during the maneuver. The height may be determined relative to the pose of the vehicle, i.e., of the vehicle is driving on a slope, then the heights can be presented in relation to the vehicle ground clearance height at the position of the obstacle. According to aspects, the road geometry determining device comprises a forward-looking sensor system connected to a vehicle control unit (VCU) arranged to determine the road geometry from an output signal of the sensor device. The sensor system may comprise any of a vision-based sensor, a lidar transceiver, and/or a radar transceiver. Thus, there are many different options for implementing the driver assist methods and systems proposed herein. A level sensor can be used to determine a pose of the vehicle relative to the horizon, i.e., if the vehicle has a slant or not. The slant of the vehicle may be an important parameter in case the environment in vicinity of the vehicle is at a slope relative to the vehicle.

According to aspects, the road geometry determining device is arranged to be connected to a map database or an on-board memory device comprising pre-determined road geometries indexed by geographical location, a positioning system arranged to determine a geographic location of the vehicle, and a VCU arranged to determine the road geometry based on the map database and on an output signal of the positioning system. This is a relatively simple way to obtain road geometry, which is an advantage. In line with the invention, the road geometry determining device is arranged to determine a drivable area associated with the geometry of the road section in the forward direction of the vehicle. The map data may also comprise topology data, indicating slopes and height differences of the road geometry in front of the vehicle.

According to the invention, the VMM module is arranged to trigger a warning signal in case the swept area by the vehicle exceeds the drivable area of the road geometry, thus alerting the driver and allowing the driver to avoid the issue, or at least to mitigate the consequences of the situation by, e.g., reducing a vehicle velocity. The warning signal may also be an external warning signal configured to alert nearby road users, pedestrians, and the like about the predicted future swept area of the vehicle. The VMM module may also be arranged to limit a maximum allowable speed by the vehicle and/or a steer angle or steer angle rate and/or a steer angle or steer angle rate in case the swept area by the vehicle exceeds the drivable area of the road geometry, thus further mitigating the risk of an accident.

According to aspects, the display device is configured to illustrate the predicted swept area by the vehicle as the lateral extreme point of the vehicle when driving in the forward direction and may also be configured to illustrate the smallest height of the vehicle for each location in the predicted swept area. This means that the driver receives intuitive an easy-to-understand information about the future consequences of a given vehicle control input, such as a steering angle.

There is also disclosed herein both heavy-duty vehicles, computer-implemented methods, computer programs, computer program products, and control units associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention as defined by the claims.

### BRIEF DESCRIPTION OF THE DRAWINGS

With reference to the appended drawings, below follows a more detailed description of embodiments of the invention cited as examples. In the drawings:
- Figure 1: shows an example multi-trailer vehicle combination;
- Figure 2: illustrates an example forward direction cornering maneuver;
- Figure 3: illustrates another example forward direction cornering maneuver;
- Figure 4: shows an example driver assistance system;
- Figure 5: schematically illustrates a system for vehicle motion management;
- Figure 6: is a flow chart illustrating methods;
- Figure 7: schematically illustrates a control unit; and
- Figure 8: shows an example computer program product;

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

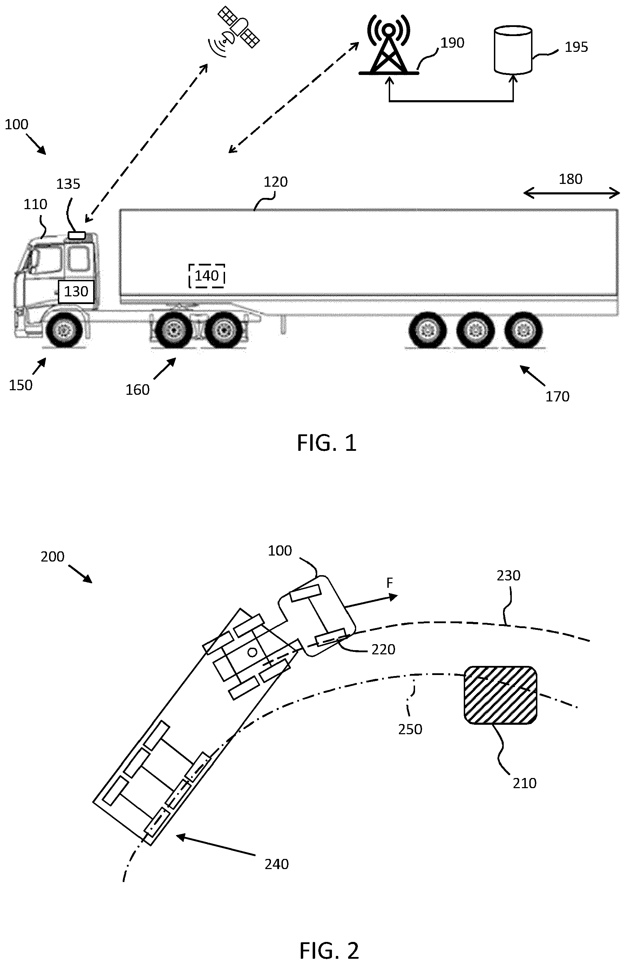

Figure 1 illustrates an example vehicle 100 for cargo transport where the herein disclosed techniques can be applied with advantage. The vehicle 100 comprises a tractor or towing vehicle 110 supported on front wheels 150 and rear wheels 160, at least some of which are driven wheels and at least some of which are steered wheels. Normally but not necessarily, all the wheels on the tractor are braked wheels. The tractor 110 is configured to tow a first trailer unit 120 supported on trailer wheels 170 by a fifth wheel connection in a known manner. The trailer wheels are normally braked wheels but may also comprise driven wheels on one or more axles. Some trailers also comprise steered wheels in order to improve maneuverability.

It is appreciated that the herein disclosed methods and control units can be applied with advantage also in other types of heavy-duty vehicles, such as trucks with drawbar connections, construction equipment, buses, and the like. The vehicle 100 may also comprise more than two vehicle units, i.e., a dolly vehicle unit may be used to tow more than one trailer. The techniques are most advantageously used in vehicles with significant front and/or rear overhangs 180. Herein, an overhang is to be construed as the lengths of a road vehicle which extend beyond the wheelbase at the front and at the rear.

The tractor 110 comprises a vehicle control unit (VCU) 130 for controlling various kinds of functionality, i.a. to achieve propulsion, braking, and steering. Some trailer units 120 also comprise a VCU 140 for controlling various functions of the trailer, such as braking of trailer wheels, and sometimes also trailer wheel propulsion and steering. The VCUs 130, 140 may be centralized or distributed over several processing circuits, often referred to as electronic control units (ECU). Parts of the vehicle control functions may also be executed remotely, e.g., on a remote server 195 connected to the vehicle 100 via wireless link and a wireless access network 190, or the like.

The VCU 130 is optionally connected to a satellite positioning system receiver 135, configured to determine a geographical position of the vehicle 100. This position may, e.g., be used to determine a location of the vehicle on a map, which can be obtained from the server 195 or pre-stored on a vehicle data memory device.

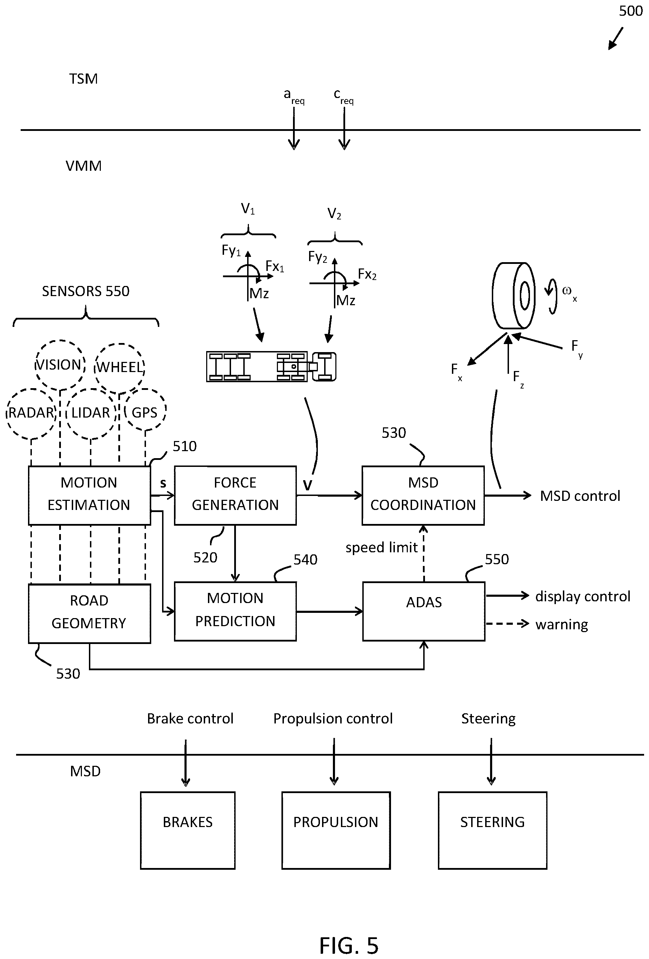

The VCU 130 on the tractor 110 (and possibly also the VCU 140 on the trailer 120) may be configured to execute vehicle control methods which are organized according to a layered functional architecture where some functionality may be comprised in a traffic situation management (TSM) domain in a higher layer and some other functionality may be comprised in a vehicle motion management (VMM) domain residing in a lower functional layer. This type of control architecture will be exemplified and discussed in more detail below in connection to Figure 5.

A vehicle performing a turning or cornering maneuver, i.e., a vehicle following a forward direction path with some curvature, will sweep an area that is larger than the actual footprint of the vehicle. This is at least in part because the rear parts of the vehicle, i.e., the trailer or rear part of the bus or truck, will "cut" the corner. Thus, when driving a vehicle with a trailer, or a vehicle with an extended wheelbase such as a bus, it is important to lead the trailer with a sufficiently wide enough arc. Any overhangs on the vehicle will also affect the swept area by projecting out from the vehicle path during the cornering maneuver.

Figure 2 shows an example cornering maneuver 200, where a vehicle 100 is turning. The left steered front wheel 220 is predicted to follow the dashed line path 230. The rear parts of the vehicle 240 will instead follow the dash-dotted line path 250. This effect must be accounted for by the driver, especially if there is some obstacle 210 to be avoided.

Predicting the extent of the swept area when driving in the forward direction can be challenging, especially if the driver is not accustomed to the vehicle and/or generally not experienced with operating a heavy-duty vehicle with a large extended wheelbase.

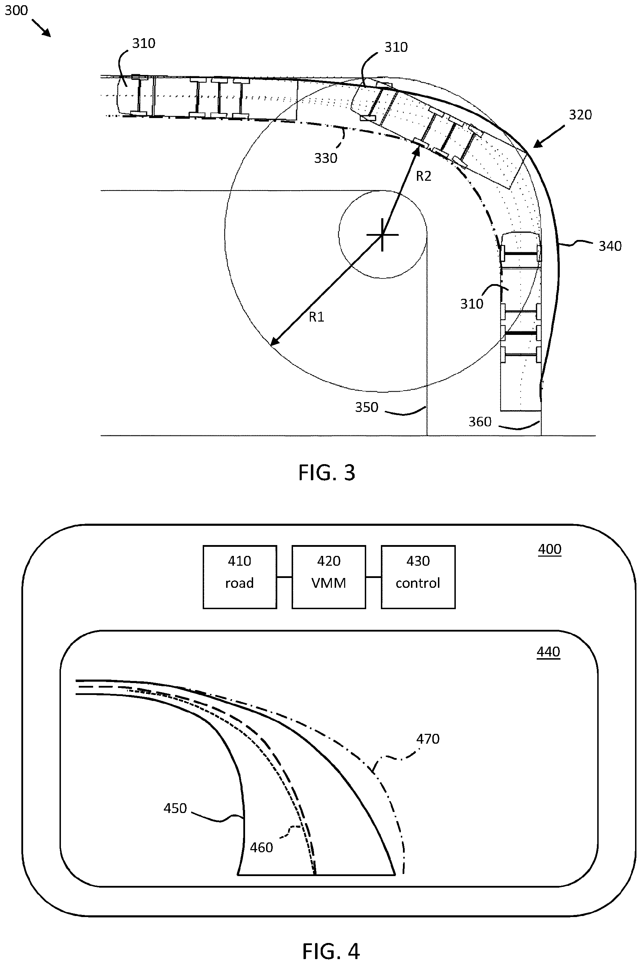

Figure 3 illustrates another example cornering maneuver 300, where a vehicle 310 with a rear overhang 320 is driving through a curve with outer radius R1. The rear wheels follow the dashed-dotted line path 330, which is not a problem in this case since the road is wide enough to accommodate this part of the swept area. However, the rear overhang 320 extends out to the right, and the extreme point of the overhang (in this case the rear right corner 320 of the vehicle 310) follows the solid line 340. This overhang may well collide with objects on the side of the road, such as a lamppost or the like. The overhang may also sweep over a sidewalk adjacent to the drivable surface of the road, which is of course highly undesired. Again, predicting the swept area by the vehicle before entering into the maneuver may be difficult also for the experienced driver.

Figure 4 illustrates an ADAS for a heavy-duty vehicle such as the vehicle 100. The ADAS comprises a road geometry determining device 410 arranged to determine a geometry of a road section 450 in a forward direction F ahead of the vehicle 100. The determined road geometry may, e.g., comprise left and right road borders 350, 360 delimiting a drivable area of the road geometry as illustrated in Figure 3 and Figure 4, or a center path of the road with corresponding road width, or some other form of representation. The drivable area may just correspond to the drivable road surface, i.e., the part of the road meant to support the heavy-duty vehicle. However, the drivable surface may advantageously also comprise additional surfaces adjacent to the actual road, which are deemed traversable if necessary, to complete a maneuver. These sections of the drivable surface may, e.g., comprise sidewalks that are possible to temporarily drive on in case pedestrian or obstacle is present. Parts of the drivable surface may also be associated with a speed-limit. Thus, the ADAS may allow a driver to temporarily drive over some small obstacle or onto the sidewalk, but only if the vehicle velocity is low enough, i.e., below some acceptance threshold.

The road geometry optionally also comprises detected obstacles in the forward direction F ahead of the vehicle 100. The obstacles comprised in the road geometry may be classified into two or more severity levels indicative of a consequence of driving over the obstacle. A small obstacle may be comprised in the drivable area as discussed above, while a larger obstacle may not. Some vehicles may be able to traverse obstacles with higher severity levels compared to other vehicles. For instance, some vehicles may have larger ground clearance compared to other vehicles and will therefore be able to pass more severe obstacles. Also, any obstacles detected as part of the road geometry may advantageously be associated with respective obstacle heights. Each point in the swept area 460, 470 or section can then be associated with a predicted smallest height of the vehicle part traversing the point, which can then be used to determine if the vehicle can traverse over the detected obstacle or not. It is appreciated that the vehicle rear overhang may be located relatively far from the ground, and it may therefore be possible to pass objects such as letterboxes and the like without colliding with them, as long as it is only the overhang which traverses a section of the road geometry. This of course depends on the geometric properties of the vehicle, which may be pre-determined and stored in a vehicle on-board memory device. The system may comprise one or more level sensors configured to determine a level state of the vehicle, e.g., relative to the horizon, and process this date in relation to the slope and/or topology of the surrounding environment relative to the vehicle level state. This could be important in such cases where the road surface slopes in relation to the plane of the vehicle since an overhang may come in contact with the ground due to the relative slope and/or topology of the surrounding environment relative to the level of the vehicle. It is thus appreciated that the road surface may be associated with a slope relative to a plane of the vehicle which may cause problems if the part of the vehicle sweeping a given section of the road geometry does not have sufficient ground clearance for traversing the section due to the relative slope. The road geometry therefore preferably comprises slope and/or topology information allowing the system to determine if the vehicle has enough ground clearance for a given maneuver and swept area.

It is appreciated that the smallest height of the vehicle traversing a given location of the swept area is essentially the smallest ground clearance of the vehicle which traverse the location, in a coordinate system of the vehicle. This ground clearance is of course dependent on the vehicle design, and likely to differ from vehicle to vehicle.

The road geometry determining device 410 advantageously comprises a forward-looking sensor system connected to the vehicle VCU 130 which is arranged to determine the road geometry from an output signal of the sensor device. The sensor system may comprise any of a vision-based sensor such as a camera or infra-red detector, a lidar transceiver, and/or a radar transceiver. More than one sensor device can of course be used for this purpose, including a plurality of sensors of the same type. One or more level sensors can be used to determine a pose of the vehicle relative to the horizon, and a relative slope of the ground relative to a plane of the wheels on the vehicle. A forward-looking camera may for instance be arranged facing in the forward direction, and the feed from this camera can be used as representation of the road geometry in front of the vehicle, including road borders and potentially also showing obstacles to the side of the road which could cause problems with the overhang during a turning maneuver. Image processing techniques can also be used to determine the drivable area of the road in front of the vehicle, and also to detect obstacles which affect the properties of the drivable area, enabling features such as automatic triggering of actions such as decreasing velocity or even automated steering of the vehicle. A radar transceiver may of course also be used to detect obstacles which limit the drivable area in front of the vehicle, and in particular to determine their height relative to the vehicle ground clearance at the position of the obstacle. Methods and hardware for detecting a drivable area in front of a vehicle are generally known and will therefore not be discussed in more detail herein.

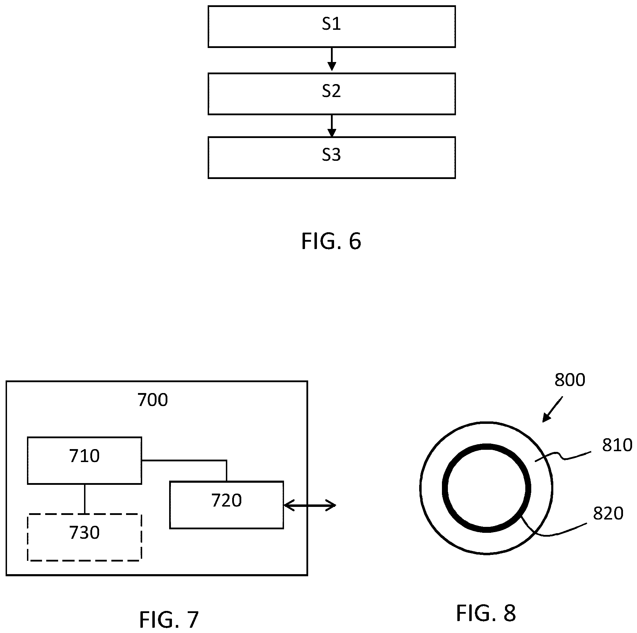

The road geometry determining device 410 is optionally also arranged to be connected to a map database, such as a map database on the remote server 195, or an on-board memory device 730 as will be discussed in more detail below in connection to Figure 7, comprising pre-determined road geometries indexed by geographical location, and possibly also surface topology such as slope. The device then also comprises a positioning system 135 arranged to determine a geographic location of the vehicle 100, which means that the VCU 130 may determine the road geometry based on the map database 195 and on an output signal of the positioning system. The VCU then determines where on the map the vehicle is, and which direction the vehicle is facing. The map then provides the road geometry in front of the vehicle. Of course, any number of on-board sensor systems can be used to refine the position estimate relative to the map. For instance, a radar transceiver can be used by the VCU 130 to match the radar image with the map data, in order to more accurately determine where on the map the vehicle is located.

The ADAS 400 also comprises a VMM module 420 configured to predict a swept area 460, 470 by the vehicle 100 when driving in the forward direction F, based on a geometric model of the vehicle and on a current vehicle control command 430, a_{req}, c_{req}. Notably, as discussed above, the swept area 460, 470 by the vehicle 100 comprises an area traversed by an overhang 180 of the vehicle 100. The swept area may, e.g., be determined by simulating the motion of the vehicle given the current control command, i.e., steering angle and vehicle velocity. The path of each point, or a subset of points, on the vehicle, may be determined over a time window extending, say 10 s into the future or so, and the hull of these points then provide the swept area. It is appreciated that only a sub-set of key points on the vehicle needs to be considered when predicting the swept area by the vehicle. For instance, it may be sufficient of the wheel paths and corner points on the vehicle is used to predict the swept area.

The ADAS 400 further comprising a display device 440 configured to illustrate the geometry of the road section 450 and the predicted swept area 460, 470 by the vehicle in dependence of the current vehicle control command 430. This means that a driver will receive assistance in maneuvering a heady-duty vehicle through a corner. A straight-forward implementation of illustrating the geometry of the road section 450 to the driver is to just show a camera feed from one or more cameras looking in the forward direction. The driver will see the road geometry on the display, and the predicted swept area will also be shown, e.g., as an overlay graphic illustration on the display. The similarity to the reverse assist systems which are common today is noted. As the driver turns the steering wheel or changes the acceleration or brake pedal position, the illustrated predicted swept area will change. This means that the driver can adjust the control input to match the swept area to the current road geometry in front of the vehicle 100 in a convenient manner. The display device 440 is optionally configured to illustrate the predicted swept area 460, 470 by the vehicle as a lateral extreme point of the vehicle 100 when driving in the forward direction F. This means that the display will show two lines, one to the left and one to the right, representing the extent of the predicted vehicle lateral extreme point as the maneuver progresses.

According to some aspects, the VMM module 420 is arranged to trigger a warning signal in case the swept area 460, 470 by the vehicle 100 exceeds the drivable area of the road geometry. This warning signal may, e.g., be an acoustic warning signal, i.e., a buzzer, or some tactile feedback, perhaps a vibration in the steering wheel informing the driver about the potential danger in case the current steering command is maintained throughout the cornering maneuver. The warning signal may also be an external warning signal configured to warn external road users about the predicted swept area. The VMM module 420 is optionally also arranged to limit a maximum allowable speed by the vehicle and/or a steer angle or steer angle rate 100 in case the swept area 460, 470 by the vehicle 100 exceeds the drivable area of the road geometry, or even halt the vehicle in case it is determined that the swept area exceeds the drivable area to an extent which jeopardizes the vehicle safety or that of some other road-user, e.g., a pedestrian, other vehicle, or detected obstacle which forms part of the road geometry in front of the vehicle 100. The system may of course also be configured to steer the vehicle away from dangerous objects.

The display device 440 can furthermore be configured to illustrate the smallest height of the vehicle for each location in the predicted swept area 460, 470. Thus, if only the overhang is predicted to sweep some area in front of the vehicle, then this can be illustrated, e.g., by a different color. The heights may, of course, be shown after having accounted for relative slope between vehicle plane and ground plane at different locations in the vicinity of the vehicle. The obstacles in front of the vehicle can also be color coded in this manner, perhaps such that an obstacle that is high enough to be hit by the overhang gets a different color compared to, e.g., a curb which will not get hit by the over-hang. The sept area may be divided into a grid or the like, and the smallest height can then be determined for each grid point or each grid sub-section.

Figure 5 illustrates an example control architecture suitable for controlling motion of a heavy-duty vehicle, such as the vehicle 100 discussed above in connection to Figure 1. The control architecture comprises a traffic situation management (TSM) layer which may comprise, e.g., a driver or some autonomous or semi-autonomous control algorithm, a VMM module, and a set of motion support device (MSD) controllers.

The VMM module operates with a time horizon of about 1 second or so, and continuously transforms the acceleration profiles a_{req} and curvature profiles c_{req} from the TSM layer into control commands for controlling vehicle motion functions, actuated by the different MSDs of the vehicle 100, such as propulsion, braking, and steering devices, which report back capabilities to the VMM, which in turn are used as constraints in the vehicle control. The VMM module performs vehicle state or motion estimation 510, i.e., the VMM module continuously determines a vehicle state s comprising positions, speeds, accelerations, and articulation angles of the different units in the vehicle combination by monitoring operations using various sensors 550 arranged on the vehicle 100, often but not always in connection to the MSDs. These sensors may comprise the forward-looking sensors discussed above, which are arranged to assist in determining the road geometry in front of the vehicle, and also to detect any obstacles present in front of the vehicle which potentially limit the drivable area.

The result of the motion estimation 510, i.e., the estimated vehicle state s, is input to a force generation module 520 which determines the required global forces V=[V₁, V₂] for the different vehicle units to cause the vehicle 100 to move according to the requested acceleration and curvature profiles a_{req}, c_{req}. The required global force vector V is input to an MSD coordination function 530 which allocates wheel forces and coordinates other MSDs such as steering and suspension. The MSD coordination function 530 outputs an MSD control allocation for the different MSDs of the vehicle 100, which may comprise any of a torque, a longitudinal wheel slip, a wheel rotational speed, and/or one or more wheel steering angles. The coordinated MSDs then together provide the desired lateral Fy and longitudinal Fx forces on the vehicle units, as well as the required moments Mz, to obtain the desired motion by the vehicle combination 100.

The VMM module also determines the road geometry ahead of the vehicle, as discussed above. This road geometry determination 530 may be based on forward looking sensors but may also make use of map databases and vehicle position information. The motion estimation, together with the force generation, can be used for motion prediction 540. This means that the position and pose of the vehicle 100 along a path that will be traversed by the vehicle if the current vehicle control commands are kept fixed is determined. By storing the extreme points of the vehicle at each time step, the swept area can be determined as the hull of the extreme points. In essence, for each predicted time step in the motion prediction, the "footprint" of the vehicle is determined, and the union of all such footprints then constitute the swept area by the vehicle for the time window of interest, which may be on the order of 10s long or so. The determined road geometry and the predicted swept area are fed into an ADAS module 550, as discussed above. The ADAS module 550 may then be used to control a display device to provide driver assistance to a driver, to trigger generation of the warning signal in order to alert the driver about a future breach of the drivable area, and optionally also to reduce the vehicle speed as discussed above. An emergency stop procedure may optionally also be triggered if the risk of a severe accident is deemed substantial.

The ADAS system may furthermore be configured to trigger an avoidance maneuver which may also comprise generation of lateral force, i.e., steering, or differential braking, in order to avoid an object in the predicted swept area.

The system may also comprise a warning system, such as a visual system, indicating that the vehicle is about to sweep an area as part of a maneuver. For instance, flashing warning lights may be triggered when the predicted swept area exceeds some nominal acceptable swept area.

Figure 6 is a flow chart illustrating a method which summarizes the above discussion. There is illustrated a computer-implemented method for providing ADAS in a heavy-duty vehicle 100. The method comprises determining S1 a geometry of a road section 450 in a forward direction F ahead of the vehicle 100, predicting S2, by a vehicle motion management, VMM, module 420, a swept area 460, 470 by the vehicle 100 when driving in the forward direction F, based on a geometric model of the vehicle and on a current vehicle control command 430, a_{req}, c_{req}, wherein the swept area 460, 470 by the vehicle 100 comprises an area traversed by an overhang 180 of the vehicle 100, and controlling S3 a display device 440 to illustrate the geometry of the road section 450 and the predicted swept area 460, 470 by the vehicle in dependence of the current vehicle control command 430.

Figure 7 schematically illustrates, in terms of a number of functional units, the components of a control unit 700 according to embodiments of the discussions and methods disclosed herein. This control unit 700 may be comprised in the vehicle 100, e.g., in the form of a vehicle motion management (VMM) unit configured to perform force allocation and the like. Processing circuitry 710 is provided using any combination of one or more of a suitable central processing unit CPU, multiprocessor, microcontroller, digital signal processor DSP, etc., capable of executing software instructions stored in a computer program product, e.g., in the form of a storage medium 730. The processing circuitry 710 may further be provided as at least one application specific integrated circuit ASIC, or field programmable gate array FPGA.

Particularly, the processing circuitry 710 is configured to cause the control unit 700 to perform a set of operations, or steps, such as the methods discussed in connection to Figure 5. For example, the storage medium 730 may store the set of operations, and the processing circuitry 710 may be configured to retrieve the set of operations from the storage medium 730 to cause the control unit 700 to perform the set of operations. The set of operations may be provided as a set of executable instructions. Thus, the processing circuitry 710 is thereby arranged to execute methods as herein disclosed.

The storage medium 730 may also comprise persistent storage, which, for example, can be any single one or combination of magnetic memory, optical memory, solid state memory or even remotely mounted memory.

The control unit 700 may further comprise an interface 720 for communications with at least one external device, such as an electric machine or a gearbox. As such the interface 720 may comprise one or more transmitters and receivers, comprising analogue and digital components and a suitable number of ports for wireline or wireless communication.

The processing circuitry 710 controls the general operation of the control unit 700, e.g., by sending data and control signals to the interface 720 and the storage medium 730, by receiving data and reports from the interface 720, and by retrieving data and instructions from the storage medium 730. Other components, as well as the related functionality, of the control node are omitted in order not to obscure the concepts presented herein.

Figure 8 illustrates a computer readable medium 810 carrying a computer program comprising program code means 820 for performing, e.g., the methods illustrated in Figure 6, when said program product is run on a computer. The computer readable medium and the code means may together form a computer program product 800.

## Claims

1. An advanced driver assistance system, ADAS, for a heavy-duty vehicle (100),
the ADAS comprising a road geometry determining device (410) arranged to determine a geometry of a road section (450) in a forward direction (F) ahead of the vehicle (100), and
a vehicle motion management, VMM, module (420) configured to predict a swept area (460, 470) by the vehicle (100) when driving in the forward direction (F), based on a geometric model of the vehicle and on a current vehicle control command (430, a_{req}, c_{req}), wherein the swept area (460, 470) by the vehicle (100) comprises an area traversed by an overhang (180) of the vehicle (100),
the ADAS further comprising a display device (440) configured to illustrate the geometry of the road section (450) and the predicted swept area (460, 470) by the vehicle in dependence of the current vehicle control command (430),
wherein the road geometry determining device (410) is arranged to determine a drivable area associated with the geometry of the road section (450) in the forward direction (F) of the vehicle (100),
**characterized in that** the VMM module (420) is arranged to trigger a warning signal in case the swept area (460, 470) by the vehicle (100) exceeds the drivable area of the road geometry.

2. The ADAS according to claim 1, wherein the road geometry comprises left and right road borders (350, 360) delimiting a drivable area of the road geometry.

3. The ADAS according to claim 1 or 2, wherein the road geometry comprises obstacles in the forward direction (F) ahead of the vehicle (100).

4. The ADAS according to claim 3, wherein the obstacles of the road geometry are classified into two or more severity levels indicative of a consequence of driving over the obstacle.

5. The ADAS according to claim 3 or 4, wherein the obstacles of the road geometry are associated with respective obstacle heights, wherein each point in the swept area (460, 470) is associated with a predicted smallest height of the vehicle part traversing the point.

6. The ADAS according to any previous claim, wherein the road geometry comprises a slope.

7. The ADAS according to claim any previous claim, wherein the road geometry determining device (410) comprises a forward-looking sensor system connected to a vehicle control unit, VCU, (130) arranged to determine the road geometry from an output signal of the sensor device.

8. The ADAS according to claim 7, wherein the sensor system comprises any of a vision-based sensor, a lidar transceiver, and/or a radar transceiver.

9. The ADAS according to any previous claim, wherein the road geometry determining device (410) is arranged to be connected to a map database (195) or an on-board memory device (730) comprising pre-determined road geometries indexed by geographical location, a positioning system (135) arranged to determine a geographic location of the vehicle (100), and a VCU (130) arranged to determine the road geometry based on the map database (195) and on an output signal of the positioning system.

10. The ADAS according to any previous claim, wherein the VMM module (420) is arranged to limit a maximum allowable speed by the vehicle and/or a steer angle or steer angle rate (100) in case the swept area (460, 470) by the vehicle (100) exceeds the drivable area of the road geometry.

11. The ADAS according to any previous claim, wherein the display device (440) is configured to illustrate the predicted swept area (460, 470) by the vehicle as the lateral extreme point of the vehicle (100) when driving in the forward direction (F).

12. The ADAS according to any previous claim, wherein the display device (440) is configured to illustrate a smallest height of the vehicle for each location in the predicted swept area (460, 470).

13. A heavy-duty vehicle (100) comprising the ADAS according to any previous claim.

14. A computer-implemented method for providing advanced driver assistance, ADAS, in a heavy-duty vehicle (100), the method comprising
determining (S1) a geometry of a road section (450) in a forward direction (F) ahead of the vehicle (100),
predicting (S2), by a vehicle motion management, VMM, module (420), a swept area (460, 470) by the vehicle (100) when driving in the forward direction (F), based on a geometric model of the vehicle and on a current vehicle control command (430, a_{req}, c_{req}), wherein the swept area (460, 470) by the vehicle (100) comprises an area traversed by an overhang (180) of the vehicle (100), and
controlling (S3) a display device (440) to illustrate the geometry of the road section (450) and the predicted swept area (460, 470) by the vehicle in dependence of the current vehicle control command (430), the method also comprising
determining a drivable area associated with the geometry of the road section (450) in the forward direction (F) of the vehicle (100), and
triggering, by the VMM module, a warning signal in case the swept area (460, 470) by the vehicle (100) exceeds the drivable area of the road geometry.

## Patentansprüche

1. Fahrerassistenzsystem, ADAS, für ein Schwerlastfahrzeug (100), wobei
das ADAS eine Straßengeometrie-Bestimmungsvorrichtung (410) umfasst, die angeordnet ist, um eine Geometrie eines Straßenabschnitts (450) in einer Vorwärtsrichtung (F) vor dem Fahrzeug (100) zu bestimmen, und
ein Fahrzeugbewegungsmanagement-Modul (420), das so konfiguriert ist, dass es einen von dem Fahrzeug (100) überstrichenen Bereich (460, 470) vorhersagt, wenn es in der Vorwärtsrichtung (F) fährt, und zwar auf der Grundlage eines geometrischen Modells des Fahrzeugs und eines aktuellen Fahrzeugsteuerungsbefehls (430, areq, creq), wobei der von dem Fahrzeug (100) überstrichene Bereich (460, 470) einen Bereich umfasst, der von einem Überhang (180) des Fahrzeugs (100) überquert wird, wobei
das ADAS ferner eine Anzeigevorrichtung (440) umfasst, die so konfiguriert ist, dass sie die Geometrie des Straßenabschnitts (450) und den vorhergesagten überstrichenen Bereich (460, 470) durch das Fahrzeug in Abhängigkeit von dem aktuellen Fahrzeugsteuerbefehl (430) anzeigt,
wobei die Straßengeometrie-Bestimmungsvorrichtung (410) eingerichtet ist, um einen befahrbaren Bereich zu bestimmen, der mit der Geometrie des Straßenabschnitts (450) in der Vorwärtsrichtung (F) des Fahrzeugs (100) verbunden ist,
**dadurch gekennzeichnet, dass** das VMM-Modul (420) eingerichtet ist, ein Warnsignal auszulösen, falls der von dem Fahrzeug (100) überstrichene Bereich (460, 470) den befahrbaren Bereich der Straßengeometrie überschreitet.

2. ADAS nach Anspruch 1, wobei die Straßengeometrie linke und rechte Straßenränder (350, 360) umfasst, die einen befahrbaren Bereich der Straßengeometrie begrenzen.

3. ADAS nach Anspruch 1 oder 2, wobei die Straßengeometrie Hindernisse in der Vorwärtsrichtung (F) vor dem Fahrzeug (100) umfasst.

4. ADAS nach Anspruch 3, wobei die Hindernisse der Straßengeometrie in zwei oder mehr Schweregrade klassifiziert sind, die eine Folge des Überfahrens des Hindernisses anzeigen.

5. ADAS nach Anspruch 3 oder 4, wobei die Hindernisse der Straßengeometrie mit jeweiligen Hindernishöhen verknüpft sind, wobei jeder Punkt in dem überstrichenen Bereich (460, 470) mit einer vorhergesagten kleinsten Höhe des Fahrzeugteils verknüpft ist, das diesen Punkt überquert.

6. ADAS nach einem der vorhergehenden Ansprüche, wobei die Straßengeometrie eine Steigung umfasst.

7. ADAS nach einem der vorhergehenden Ansprüche, wobei die Vorrichtung (410) zur Bestimmung der Straßengeometrie ein vorwärtsgerichtetes Sensorsystem umfasst, das mit einer Fahrzeugsteuereinheit (130) verbunden ist, die so angeordnet ist, dass sie die Straßengeometrie aus einem Ausgangssignal der Sensorvorrichtung bestimmt.

8. ADAS nach Anspruch 7, wobei das Sensorsystem einen auf Sicht basierenden Sensor, einen Lidar-Sender-Empfänger und/oder einen Radar-Sender-Empfänger umfasst.

9. ADAS nach einem der vorhergehenden Ansprüche, wobei die Vorrichtung (410) zur Bestimmung der Straßengeometrie so angeordnet ist, dass sie mit einer Kartendatenbank (195) oder einer On-Board-Speichervorrichtung (730) verbunden ist, die vorbestimmte Straßengeometrien umfasst, die durch einen geografischen Ort indiziert sind, ein Positionierungssystem (135), das so angeordnet ist, dass es einen geografischen Ort des Fahrzeugs (100) bestimmt, und eine VCU (130), die so angeordnet ist, dass sie die Straßengeometrie auf der Grundlage der Kartendatenbank (195) und eines Ausgangssignals des Positionierungssystems bestimmt.

10. ADAS nach einem der vorhergehenden Ansprüche, wobei das VMM-Modul (420) so eingerichtet ist, dass es eine maximal zulässige Geschwindigkeit des Fahrzeugs und/oder einen Lenkwinkel oder eine Lenkwinkelrate (100) begrenzt, wenn der vom Fahrzeug (100) überstrichene Bereich (460, 470) den befahrbaren Fläche der Straßengeometrie übersteigt.

11. ADAS nach einem der vorhergehenden Ansprüche, wobei die Anzeigevorrichtung (440) so konfiguriert ist, dass sie den vorhergesagten überstrichenen Bereich (460, 470) durch das Fahrzeug als den seitlichen Extrempunkt des Fahrzeugs (100) beim Fahren in Vorwärtsrichtung (F) anzeigt.

12. ADAS nach einem der vorhergehenden Ansprüche, wobei die Anzeigevorrichtung (440) so konfiguriert ist, dass sie eine kleinste Höhe des Fahrzeugs für jeden Ort in dem vorhergesagten überstrichenen Bereich (460, 470) anzeigt.

13. Schwerlastfahrzeug (100) mit dem ADAS nach einem der vorhergehenden Ansprüche.

14. Computerimplementiertes Verfahren zur Bereitstellung einer Fahrassistenz, ADAS, in einem Schwerlastfahrzeug (100), wobei das Verfahren umfasst
Bestimmen (S1) einer Geometrie eines Straßenabschnitts (450) in einer Vorwärtsrichtung (F) vor dem Fahrzeug (100),
Vorhersagen (S2) eines von dem Fahrzeug (100) beim Fahren in Vorwärtsrichtung (F) überstrichenen Bereichs (460, 470) durch ein Fahrzeugbewegungsmanagement-Modul (420) auf der Grundlage eines geometrischen Modells des Fahrzeugs und eines aktuellen Fahrzeugsteuerbefehls (430, areq, creq), wobei der von dem Fahrzeug (100) überstrichene Bereich (460, 470) einen Bereich umfasst, der von einem Überhang (180) des Fahrzeugs (100) überquert wird, und
Steuern (S3) einer Anzeigevorrichtung (440), um die Geometrie des Straßenabschnitts (450) und die vorhergesagte überstrichene Fläche (460, 470) durch das Fahrzeug in Abhängigkeit von dem aktuellen Fahrzeugsteuerungsbefehl (430) darzustellen, wobei das Verfahren auch Folgendes umfasst,
Bestimmen eines befahrbaren Bereichs, der mit der Geometrie des Straßenabschnitts (450) in der Vorwärtsrichtung (F) des Fahrzeugs (100) verbunden ist, und
das Auslösen eines Warnsignals durch das VMM-Modul, wenn die vom Fahrzeug (100) überstrichene Fläche (460, 470) die befahrbare Fläche der Straßengeometrie überschreitet.

## Revendications

1. Système avancé d'assistance au conducteur, ADAS, pour un véhicule lourd (100), l'ADAS comprenant un dispositif de détermination de géométrie de route (410) agencé pour déterminer une géométrie d'un tronçon de route (450) dans une direction avant (F) en avant du véhicule (100), et
un module de gestion de mouvement de véhicule, VMM, (420) configuré pour prédire une zone balayée (460, 470) par le véhicule (100) lors de la conduite dans la direction avant (F), sur la base d'un modèle géométrique du véhicule et d'une instruction de commande de véhicule actuelle (430, a_{req}, c_{req}), dans lequel la zone balayée (460, 470) par le véhicule (100) comprend une zone traversée par un porte-à-faux (180) du véhicule (100),
l'ADAS comprenant en outre un dispositif d'affichage (440) configuré pour illustrer la géométrie du tronçon de route (450) et la zone balayée prédite (460, 470) par le véhicule en fonction de l'instruction de commande de véhicule actuelle (430),
dans lequel le dispositif de détermination de géométrie de route (410) est agencé pour déterminer une zone carrossable associée à la géométrie du tronçon de route (450) dans la direction avant (F) du véhicule (100),
**caractérisé en ce que** le module VMM (420) est agencé pour déclencher un signal d'avertissement dans le cas où la zone balayée (460, 470) par le véhicule (100) dépasse la zone carrossable de la géométrie de route.

2. ADAS selon la revendication 1, dans lequel la géométrie de route comprend des bordures de route gauche et droite (350, 360) délimitant une zone carrossable de la géométrie de route.

3. ADAS selon la revendication 1 ou 2, dans lequel la géométrie de route comprend des obstacles dans la direction avant (F) en avant du véhicule (100).

4. ADAS selon la revendication 3, dans lequel les obstacles de la géométrie de route sont classés en deux niveaux de gravité ou plus indicatifs d'une conséquence du franchissement de l'obstacle.

5. ADAS selon la revendication 3 ou 4, dans lequel les obstacles de la géométrie de route sont associés à des hauteurs d'obstacles respectives, dans lequel chaque point dans la zone balayée (460, 470) est associé à la plus petite hauteur prédite de la partie de véhicule traversant le point.

6. ADAS selon l'une quelconque des revendications précédentes, dans lequel la géométrie de route comprend une pente.

7. ADAS selon l'une quelconque des revendications précédentes, dans lequel le dispositif de détermination de géométrie de route (410) comprend un système de capteur à détection frontale connecté à une unité de commande de véhicule, VCU, (130) agencée pour déterminer la géométrie de route à partir d'un signal de sortie du dispositif capteur.

8. ADAS selon la revendication 7, dans lequel le système de capteur comprend l'un parmi un capteur basé sur la vision, un émetteur-récepteur lidar et/ou un émetteur-récepteur radar.

9. ADAS selon l'une quelconque des revendications précédentes, dans lequel le dispositif de détermination de géométrie de route (410) est agencé pour être connecté à une base de données cartographique (195) ou à un dispositif de mémoire embarqué (730) comprenant des géométries de route prédéterminées indexées par emplacement géographie, un système de positionnement (135) agencé pour déterminer un emplacement géographique du véhicule (100), et une VCU (130) agencée pour déterminer la géométrie de route sur la base de la base de données cartographique (195) et d'un signal de sortie du système de positionnement.

10. ADAS selon l'une quelconque des revendications précédentes, dans lequel le module VMM (420) est agencé pour limiter une vitesse admissible maximale par le véhicule et/ou un angle de braquage ou un taux d'angle de braquage (100) dans le cas où la zone balayée (460, 470) par le véhicule (100) dépasse la zone carrossable de la géométrie de route.

11. ADAS selon l'une quelconque des revendications précédentes, dans lequel le dispositif d'affichage (440) est configuré pour illustrer la zone balayée prédite (460, 470) par le véhicule comme étant le point extrême latéral du véhicule (100) lors de la conduite dans la direction avant (F).

12. ADAS selon l'une quelconque des revendications précédentes, dans lequel le dispositif d'affichage (440) est configuré pour illustrer la plus petite hauteur du véhicule pour chaque emplacement dans la zone balayée prédite (460, 470).

13. Véhicule lourd (100) comprenant l'ADAS selon l'une quelconque des revendications précédentes.

14. Procédé mis en oeuvre par ordinateur pour fournir une assistance avancée au conducteur, ADAS, dans un véhicule lourd (100), le procédé comprenant
la détermination (S1) d'une géométrie d'un tronçon de route (450) dans une direction avant (F) en avant du véhicule (100),
la prédiction (S2), par un module de gestion de mouvement de véhicule, VMM, (420), d'une zone balayée (460, 470) par le véhicule (100) lors de la conduite dans la direction avant (F), sur la base d'un modèle géométrique du véhicule et d'une instruction de commande de véhicule actuelle (430, a_{req}, c_{req}), où la zone balayée (460, 470) par le véhicule (100) comprend une zone traversée par un porte-à-faux (180) du véhicule (100), et
la commande (S3) d'un dispositif d'affichage (440) pour illustrer la géométrie du tronçon de route (450) et la zone balayée prédite (460, 470) par le véhicule en fonction de l'instruction de commande de véhicule actuelle (430), le procédé comprenant également
la détermination d'une zone carrossable associée à la géométrie du tronçon de route (450) dans la direction avant (F) du véhicule (100), et
le déclenchement, par le module VMM, d'un signal d'avertissement dans le cas où la zone balayée (460, 470) par le véhicule (100) dépasse la zone carrossable de la géométrie de route.
